# EUROPÄISCHE PATENTANMELDUNG

(11) **EP 4 080 753 A1**
(43) Veröffentlichungstag der Anmeldung: **26.10.2022**
(21) Anmeldenummer: 22161266.6
(22) Anmeldetag: 10.03.2022
(51) Int. Cl.: H02M 7/5395, H02P 27/08

(54) **VERFAHREN ZUM ANSTEUERN EINER WENIGSTENS EIN SCHALTELEMENT UMFASSENDEN ELEKTRISCHEN SCHALTUNGSANORDNUNG, STEUERGERÄT, ELEKTRISCHE SCHALTUNGSEINRICHTUNG UND KRAFTFAHRZEUG**

(30) Priorität: 21.04.2021 DE 102021110139
(71) Anmelder: Audi AG, 85045 Ingolstadt (DE)
(72) Erfinder: Till, Stefan, 85049 Ingolstadt (DE); Tkatschenko, Alexander, 85132 Schernfeld (DE)

(57) **Zusammenfassung**

Verfahren zum Ansteuern einer wenigstens ein Schaltelement (Sᵢ) umfassenden elektrischen Schaltungsanordnung (4), wobei das Schaltelement (Sᵢ) durch eine Treiberschaltung (7) in Abhängigkeit einer Schaltsignalinformation zum Einschalten und Ausschalten angesteuert wird, wobei die Schaltsignalinformation fortlaufend ermittelt wird und jeweils für wenigstens ein Schaltsignalzeitfenster (11, 12) mit festgelegter Dauer eine Einschaltdauer und eine Signallageinformation vorgibt, wobei für ein Einschaltsignal (10), das sich aus einer Einschaltdauer ergibt, die geringer als die Dauer des Schaltsignalzeitfensters (11, 12) ist, durch die Signallageinformation die Lage des Einschaltsignals (10) innerhalb des Schaltsignalzeitfensters angegeben wird.

## Beschreibung

Die Erfindung betrifft ein Verfahren zum Ansteuern einer wenigstens ein Schaltelement umfassenden elektrischen Schaltungsanordnung, wobei das Schaltelement durch eine Treiberschaltung in Abhängigkeit einer Schaltsignalinformation zum Einschalten und Ausschalten angesteuert wird und die Schaltsignalinformation fortlaufend ermittelt wird. Weiterhin betrifft die Erfindung ein Steuergerät, eine elektrische Schaltungseinrichtung sowie ein Kraftfahrzeug.

Kraftfahrzeuge mit einem elektrischen Antrieb umfassen als Traktionselektromotor in der Regel eine Synchronmaschine oder eine Asynchronmaschine, welche über eine Leistungselektronik aus einer Traktionsbatterie des Kraftfahrzeugs gespeist wird. Mittels der Leistungselektronik wird der von dem Traktionsenergiespeicher abgegebene Gleichstrom in einen Wechselstrom gewandelt, um den elektrischen Traktionsmotor zu betreiben. Dadurch kann eine beispielsweise dreiphasige elektrische Maschine an den Eingangsklemmen mit einer Spannung beaufschlagt werden, wobei durch die Spannungsdifferenz ein Stromfluss in der elektrischen Maschine und das gewünschte Drehmoment des elektrischen Traktionsmotors erzeugt wird.

Die Ansteuerung der Schaltelemente erfolgt dabei anhand von Vorgaben, welche beispielsweise von dem Fahrbetrieb bzw. dem aktuellen Betriebszustand des Kraftfahrzeugs abhängen. Dabei ist es das Ziel, die einzelnen Schaltelemente der Leistungselektronik derart zu schalten, dass ein sinusförmiger Phasenstrom mit dem gewünschten Phasenversatz zwischen Spannung und Amplitude erzeugt wird.

Um das Auftreten von Oberwellen, welche unerwünschte Verluste und/oder eine Instabilität einer Stromregelung zur Folge haben können, zu reduzieren und/oder zu vermeiden, ist es erforderlich, dass die von der Leistungselektronik an den Motor abgegebene Spannung möglichst gut an eine Sinusform angenähert wird. Um aus der von der Traktionsbatterie abgegebenen Gleichspannung eine möglichst sinusförmige Wechselspannung zu erzeugen, ist es erforderlich, dass die Schaltelemente mit einer höheren Frequenz als die Grundfrequenz des zu erzeugenden Wechselstroms geschaltet werden. So kann es beispielsweise kann es wünschenswert sein, pro Periodendauer der Grundwelle des sinusförmigen Phasenstroms die ausgegebene Spannung mindestens zehn Mal zu variieren, also zehn Schaltvorgänge der Schaltelemente vorzunehmen.

Da die Grundfrequenz des sinusförmigen Stroms insbesondere bei einem Traktionsantrieb eines Kraftfahrzeugs mit steigender Drehzahl ansteigt, muss auch die Ansteuerung der Schaltelemente immer schneller erfolgen, um das gewünschte Verhältnis zwischen der Ansteuerung der Schaltelemente und Frequenz der Grundwellen der erzeugten Wechselspannung beizubehalten. Dies erfordert, dass entsprechende Schaltsignalinformationen, welche die zu stellende Wechselspannung betreffen, ebenfalls in höherer Geschwindigkeit ermittelt werden, damit diese für die entsprechende Ansteuerung der Schaltelemente zur Verfügung stehen. Da in der Regel für jeden Schaltvorgang eine eigene Schaltsignalinformation berechnet werden muss, ergibt sich entsprechend eine von einer Recheneinrichtung zu leistende Rechenfrequenz, welche entsprechend der gewünschten Schaltvorgänge dem Vielfachen der Frequenz der Grundwelle der zu erzeugenden Wechselspannung entspricht.

Folglich reduziert sich bei steigenden Schaltfrequenzen auch die Zeit, die zur Ermittlung dieser Schaltsignalinformationen zur Verfügung steht, wodurch sich hohe Anforderungen an die Leistungsfähigkeit einer zur Ermittlung der Schaltsignalinformation eingesetzten Recheneinrichtung ergeben. Das Erfordernis, pro Periodendauer der Grundwelle der zu erzeugenden Wechselspannung mehrere Schaltvorgänge vorzunehmen, erfordert bei steigender Frequenzen der Grundwelle bzw. einem hochfrequenten Betrieb der Traktionselektromaschine den Einsatz von schnelleren Recheneinrichtungen, welche die geforderten Berechnungen in entsprechend kürzerer Zeit vornehmen können. Schnellere Recheneinrichtungen mit einer höheren Rechenfrequenz sind in der Regel jedoch teurer und auch die Komplexität der Rechenvorgänge selbst sowie der Kommunikation zwischen den Komponenten des Traktionsantrieb nimmt zu. Es ist daher wünschenswert, ein Verfahren anzugeben, welches eine Entkopplung zwischen der Schaltfrequenz und der Rechenfrequenz ermöglicht.

Zur Lösung dieser Aufgabe ist bei einem Verfahren der eingangs genannten Art erfindungsgemäß vorgesehen, dass die Schaltsignalinformation jeweils für wenigstens ein Schaltsignalzeitfenster mit festgelegter Dauer eine Einschaltdauer und eine Signallageinformation vorgibt, wobei für ein Einschaltsignal, das sich aus einer Einschaltdauer ergibt, die geringer als die Dauer des Schaltsignalzeitfensters ist, durch die Signallageinformation die Lage des Einschaltsignals innerhalb des Schaltsignalzeitfensters angegeben wird.

Die Schaltsignalinformation umfasst eine Einschaltdauer und eine Signallageinformation. Die Schaltsignalinformation kann von eine Recheneinheit, beispielsweise einem Steuergerät, fortlaufend mit einer Rechenfrequenz ermittelt werden und über eine Schnittstelle an die Treiberschaltung zur Ansteuerung des Schaltelements übermittelt werden. Die Einschaltdauer, mit der das Schaltelement innerhalb des Schaltsignalzeitfensters eingeschaltet wird, entspricht einem Duty-Cycle des Schaltelements und gibt an, zu welchem Anteil der Schaltsignaldauer bzw. des Schaltsignalzeitfensters das Schaltelement leitfähig geschaltet ist. Bei bisherigen Verfahren zur Ansteuerung eines Schaltelements wird das Schaltelement in der Regel mit einer mittensynchronen Ansteuerung angesteuert, bei der das Einschaltsignal mittig in einem einzelnen, zugeordneten Zeitfenster liegt. Die Zeitdauer des Einschaltsignals, also die Breite des Einschaltpulses, hängt von dem einzustellenden Duty-Cycle bzw. der Dauer, in der das Schaltelement leitfähig geschaltet werden soll, ab.

Durch die Signallageinformation ergibt sich vorteilhaft ein zusätzlicher Freiheitsgrad für die Positionierung der Einschaltsignale innerhalb des Schaltsignalzeitfensters. Die Lage des Einschaltsignals innerhalb des Schaltsignalzeitfensters bezieht sich auf eine zeitliche Lage des Einschaltsignals innerhalb des Schaltsignalzeitfensters. Das Einschaltsignal kann beispielsweise ein Rechteckpuls sein, welcher zwischen einem ersten Pegel, welcher einer logischen Null für ein ausgeschaltetes Schaltelement entspricht, und einem zweiten Pegel, welcher einer logischen Eins für ein eingeschaltetes Schaltelement entspricht, liegt. Für diesen Puls kann durch die Lageinformation die Lage in dem Schaltsignalzeitfenster, also der Beginn und das Ende des Rechteckpulses in Bezug zu dem Beginn und dem Ende des Schaltsignalzeitfensters, angegeben werden. Es ist auch möglich, dass eine Aufteilung des Einschaltsignals in zwei oder mehrere Teilsignale beschrieben wird, wobei insbesondere für jeden Teil des Einschaltsignals ebenfalls jeweils eine Lage in dem Schaltsignalzeitfenster festgelegt wird.

Das erfindungsgemäße Verfahren ermöglicht eine Entkopplung zwischen einer Rechenfrequenz, mithin also der Frequenz, in der neue Schaltsignalinformationen vorliegen, und der Frequenz, mit der das Schaltelement geschaltet wird. Dazu wird pro vorliegender Schaltinformation für ein oder mehrere Schaltsignalzeitfenster jeweils neben der Einschaltdauer auch eine Lage des Einschaltsignals innerhalb des Schaltsignalzeitfensters angegeben. Dies ermöglicht es, dass die Lage des Einschaltsignals innerhalb des Schaltsignalzeitfensters variiert werden kann.

Die Schaltsignalinformation kann erfindungsgemäß für zwei oder mehr Schaltsignalzeitfenster jeweils eine Einschaltdauer und eine Lage des Einschaltsignals vorgeben. Dies ermöglicht es, dass durch die Lage der Einschaltsignale beispielsweise pro Schaltsignalzeitfenster separate Einschaltsignale erzeugt werden. Es ist auch möglich, dass über mehrere Schaltsignalzeitfenster hinweg gemeinsame Gesamteinschaltpulse gebildet werden, wie nachfolgend noch genauer erläutert werden wird. Auf diese Weise kann unabhängig von der Frequenz, mit der die Schaltsignalinformation fortlaufend beispielsweise durch ein Steuergerät ermittelt wird, eine Ansteuerung des Schaltelements erfolgen. Durch diese Entkopplung kann auch bei dem Erfordernis, beispielsweise für eine Grundwelle einer zu erzeugenden Wechselspannung mehrere Schaltvorgänge vorzunehmen, eine höhere Ansteuerungsfrequenz gewählt werden, da die maximale Frequenz, mit der das Schaltelement geschaltet wird, nicht mehr von der Rechenfrequenz, mit der die Schaltsignalinformation ermittelt wird, abhängt.

Ferner kann eine niedrigere Schaltfrequenz durch über mehrere Schaltsignalzeitfenster zusammenhängende Gesamteinschaltpulse erzeugt werden, wodurch eine Berechnungsgüte von komplexen Funktionen, beispielsweise einer Drehzahlfilterung, auch bei einer Reduzierung, beispielsweise einer Halbierung, der Schaltfrequenz beibehalten werden kann. Da pro Rechenperiode eine Schaltsignalinformation vorliegt, können die Einschaltflanke und die Ausschaltflanke eines über mehrere Schaltsignalzeitfenster zusammenhängenden Gesamteinschaltpulses jeweils als separate Schaltsignalinformationen berechnet werden, wodurch eine Regelbandbreite signifikant erhöht werden kann. Eine Reduzierung der Schaltfrequenz kann durch das erfindungsgemäße Verfahren somit vorteilhaft mit einer gegenüber einer mittensynchronen Ansteuerung erhöhten Regelbandbreite umgesetzt werden.

Gegenüber einer reinen mittensynchronen Ansteuerung, bei der das Einschaltsignal symmetrisch und den zeitlichen Mittelpunkt eines z. B. doppelt so großen Schaltsignalzeitfensters angeordnet ist, kann mit dem erfindungsgemäßen Verfahren durch das Verwenden von kürzeren Schaltsignalzeitfenstern sowie durch das Verschieben des Einschaltsignals innerhalb des Schaltsignalzeitfensters das Verhältnis zwischen Rechenfrequenz und der Schaltfrequenz, mit der das Schaltelement angesteuert wird, angepasst werden.

Vorteilhaft ist es dabei möglich, die Schaltfrequenz des Schaltelements höher als die Rechenfrequenz zu wählen, wenn pro Schaltsignalinformation, also pro Rechenperiode, für zwei oder mehr Schaltsignalzeitfenster jeweils eine Einschaltdauer und eine Signallageinformation ermittelt wird, und/oder wenn durch die Signallageinformation eine Aufteilung des Einschaltsignals in mehrere Teilsignale erfolgt. Durch das erfindungsgemäße Verfahren kann vorteilhaft ohne Verwendung von schnelleren Recheneinrichtungen und insbesondere unter Beibehaltung eines gewünschten Auslastungsgrads eine Erhöhung der Schaltfrequenz erzielt werden, wodurch Kosten bei der Herstellung einer Schalteinrichtung eingespart werden können. Zusätzlich oder alternativ dazu ist jedoch auch möglich, die Schaltfrequenz niedriger als die Rechenfrequenz zu wählen, beispielsweise indem die Einschaltsignale in einzelnen Schaltsignalzeitfenstern zu gemeinsamen Gesamteinschaltpulsen zusammengefasst werden, so dass die Ansteuerung des Schaltelements bei Anwendung des erfindungsgemäßen Verfahrens und unter Verwendung derselben Schnittstelle variabel an verschiedene Bedingungen und Anforderungen angepasst werden kann.

Eine Lage des Einschaltsignals wird dabei wenigstens für die Einschaltsignale angegeben, deren Einschaltdauer geringer als die Dauer des Schaltsignalzeitfensters ist, also für Einschaltsignale, welche einem Duty-Cycle kleiner als 100 % entsprechen. Eine Lage des Einschaltsignals innerhalb des Schaltsignalzeitfensters kann insbesondere für Einschaltsignale angegeben werden, deren Einschaltdauer größer als Null und kleiner als die Dauer des Schaltsignalzeitfensters ist. Einem Einschaltsignal, dessen Einschaltdauer der Dauer des Schaltsignalzeitfensters entspricht bzw. einem Einschaltsignal, welches einem für die Dauer des Schaltsignalzeitfensters dauerhaft ausgeschalteten Schaltelement entspricht, kann keine besondere Lage zugewiesen werden, da der Schaltzustand des Schaltelements innerhalb des Schaltsignalzeitfensters stets gleich ist und sich das Einschaltsignal somit innerhalb des Schaltsignalzeitfensters nicht ändert.

Es ist im Rahmen des erfindungsgemäßen Verfahrens dennoch möglich, dass auch Einschaltdauern verwendet werden, welche einem dauerhaft eingeschalteten oder einem dauerhaft ausgeschalteten Schaltsignal, mithin also einem Duty-Cycle in dem Schaltsignalzeitfenster von 100 % bzw. von 0 % entsprechen, erfolgt, wobei für dieses Schaltsignalzeitfenster keine gesonderte Signallageninformation übermittelt werden muss bzw. wobei eine übermittelte Signallageinformation ohne Einfluss auf das für die Dauer des Schaltsignalzeitfensters ein durchgehend eingeschaltetes bzw. durchgehend ausgeschaltetes Schaltelement beschreibende Einschaltsignal ist.

Weiterhin kann vorgesehen sein, dass eine Mindesteinschaltdauer bzw. eine maximal zulässige Einschaltdauer, welche geringer als die Dauer des Schaltsignalzeitfensters ist, vorgesehen ist, um die maximale Schaltgeschwindigkeit des Schaltelements zu berücksichtigen und mithin keine Schaltvorgänge anzufordern, welche physikalisch von dem Schaltelement nicht umgesetzt werden können. Dadurch kann vermieden werden, dass zu kurze Einschaltdauern oder zu kurze Ausschaltdauern, welche von dem Schaltelement nicht gestellt werden können, durch die Schaltsignalinformation nicht angefordert werden.

Erfindungsgemäß kann vorgesehen sein, dass sie Signallageinformation eine Lage aus einer Gruppe aus mehreren möglichen Lagen angibt. Dadurch kann vorteilhaft die grundsätzlich unendliche Anzahl an Möglichkeiten, mit der ein Einschaltsignal mit einer Dauer, welche geringer als die Dauer des Schaltsignalzeitfensters ist, innerhalb des Schaltsignalzeitfensters angeordnet wird, auf ein handhabbares Maß reduziert werden. Vorteilhaft wird dadurch ermöglicht, den einzelnen Lagen aus der Gruppe aus mehreren möglichen Lagen jeweils eine Nummer zuzuweisen und diese Nummer als Signallageinformation zu verwenden. Dies ermöglicht vorteilhaft, dass der Treiberschaltung beispielsweise diese Nummer dann als Signallageinformation über eine entsprechende Schnittstelle übermittelt wird und die Treiberschaltung die entsprechende Lage des Einschaltsignals beispielsweise in Abhängigkeit einer hinterlegten Zuordnungsvorschrift vornimmt.

In einer bevorzugten Ausgestaltung der Erfindung umfasst die Gruppe aus möglichen Lagen eine Ausschaltflankenlage, bei der das Einschaltsignal direkt zu Beginn des Schaltsignalzeitfensters beginnt, eine Einschaltflankenlage, bei der das Einschaltsignal direkt am Ende des Schaltsignalzeitfensters endet, eine mittensynchrone Lage, bei der das Einschaltsignal mittig in dem Schaltsignalzeitfenster liegt, und/oder eine inverse Lage, bei der ein erster Teil des Einschaltsignals direkt zu Beginn des Schaltsignalzeitfensters beginnt und ein zweiter Teil des Einschaltsignals am Ende des Schaltsignalzeitfensters endet, wobei zwischen dem ersten Teil und dem zweiten Teil eine Ausschaltphase liegt.

Bei der Ausschaltflankenlage beginnt das Einschaltsignal direkt zu Beginn des Schaltsignalzeitfensters. Abhängig von der zeitlichen Dauer des Einschaltsignals, mithin also von der Einschaltdauer, liegt eine Ausschaltflanke innerhalb des Schaltsignalzeitfensters. Ab der Ausschaltflanke folgt eine Ausschaltphase, welche sich bis zum Ende des Schaltsignalzeitfensters erstreckt. In der Ausschaltphase ist das Einschaltsignal auf einem Pegel, welcher einem ausgeschalteten Schaltelement entspricht.

Bei der Einschaltflankenlage endet das Einschaltsignal mit dem Ende des Schaltsignalzeitfensters, wobei abhängig von der zeitlichen Dauer des Schaltsignals eine Einschaltflankenlage innerhalb des Schaltsignalzeitfensters liegt. Von Beginn des Schaltsignalzeitfensters an bis zu der Einschaltflanke liegt eine Ausschaltphase, wobei nach der Einschaltflanke entsprechend dem Einschaltsignal eine Einschaltphase folgt.

Die Einschaltflankenlage und die Ausschaltflankenlage können verwendet werden, um mehrere Einschaltsignale zu Gesamteinschaltsignalen bzw. Gesamteinschaltsignalen zu kombinieren, welche sich über das Ende eines Schaltsignalzeitfensters hinaus erstrecken. Es ist insbesondere möglich, die Einschaltflankenlage und die Ausschaltflankenlage mit zusätzlichen Einschaltsignalen, welche eine Einschaltdauer entsprechend der gesamten Dauer des Schaltsignalzeitfensters aufweisen, zu kombinieren. Dabei können ein oder mehrere zusätzlichen Einschaltsignale, welche einem Duty-Cycle von 100% entsprechen, zeitlich zwischen einem Einschaltsignal in Einschaltflankenlage und einem Einschaltsignal in Ausschaltflankenlage angeordnet werden, so dass kombinierte Einschaltsignale über mehrere Schaltsignalzeitfenster hinweg erstellt werden können.

Eine weitere mögliche Lage des Einschaltsignals ist eine mittensynchrone Lage, bei der das Einschaltsignal mittig in dem Schaltsignalzeitfenster liegt. Dies ermöglicht es, dass insbesondere mehrere dieser mittensynchronen Einschaltsignale hintereinander erzeugt werden können, so dass sich eine Einschaltfrequenz ergibt, welche um die Anzahl der verwendeten Schaltsignalzeitfenster gegenüber der Rechenfrequenz, mit der die Schaltsignalinformation ermittelt wird, erhöht ist. Bei der Verwendung von zwei Schaltsignalzeitfenstern kann somit eine Verdopplung der Schaltfrequenz gegenüber der Rechenfrequenz erzielt werden. Entsprechend kann bei der Verwendung von mehr als zwei Schaltsignalzeitfenstern eine weitere Erhöhung der Schaltfrequenz gegenüber der Rechenfrequenz umgesetzt werden.

Durch die inverse Lage, bei der der erste Teil des Einschaltsignals direkt zu Beginn des Schaltsignalzeitfensters beginnt und ein zweiter Teil des Einschaltsignals am Ende des Schaltsignalzeitfensters endet, bietet sich die Möglichkeit, auch innerhalb eines Schaltsignalzeitfensters eine Ausschaltphase zwischen dem ersten Teil und dem zweiten Teil des Einschaltsignals vorzusehen. Die Dauer der Ausschaltphase ergibt sich dabei aus der Einschaltdauer des Einschaltsignals entsprechend der Schaltsignalinformation. Die Ausschaltphase liegt insbesondere symmetrisch um den zeitlichen Mittelpunkt des Schaltsignalzeitfensters, sodass sich eine inverse mittensynchrone Lage des Einschaltsignals ergibt. Mittels der inversen Lage kann innerhalb eines Schaltsignalzeitfensters ein in einem vorangehenden Schaltsignalzeitfenster begonnenes Einschaltsignal beendet und einen neues Einschaltsignal begonnen werden.

Durch die Kombination der verschiedenen Lagen des Einschaltsignals aus der Gruppe von möglichen Lagen können vorteilhaft Zustandswechsel zwischen Einschaltphasen und Ausschaltphasen zu beliebigen Zeitpunkten umgesetzt werden. Dies hat den Vorteil, dass beispielsweise eine über das wenigstens eine Schaltelement erzeugte Ausgangsspannung sehr exakt umgesetzt werden kann. Insbesondere im Zusammenhang mit einer Regelung kann auf diese Weise beispielsweise eine als Stellgröße verwendete Spannung, zum Beispiel eine mehrphasige Statorspannung, genauer umgesetzt werden, was positiven Einfluss auf die Genauigkeit eines einzustellenden Stromes und insbesondere eines Drehmoments einer über den Strom gespeisten elektrischen Maschine hat.

Die unterschiedlichen Lagen der Gruppe aus möglichen Lagen ermöglichen sowohl eine Erhöhung der Frequenz um einen Faktor 2 oder mehr mittels überschaubarem Rechenaufwand und bei gleichbleibender Rechenfrequenz. Dabei können zusätzlich zu diesen Lagen auch ein dauerhaft eingeschaltetes Einschaltsignal und ein dauerhaft ausgeschaltetes Einschaltsignal eingesetzt werden. Insbesondere können die sich aus den Lagen und den Einschaltdauern ergebenen Positionierungen zum Erzeugen kontinuierlicher Signale kombiniert werden, indem zum Beispiel die Zustände jeweils zwischen zwei aufeinanderfolgenden Schaltsignalzeitfenstern beibehalten werden und ein Zustandswechsel über die Einschaltflankenlage, die Ausschaltflankenlage und/oder die inverse Lage erzeugt wird.

Neben der Frequenzverdopplung ist es auch möglich, eine Frequenzhalbierung oder eine weitere Verringerung der Schaltfrequenz gegenüber der Rechenfrequenz umzusetzen. Durch die vier unterschiedlichen Lagen reduziert sich auch die Informationsmenge, welche als Schaltsignalinformation an die Treiberschaltung übermittelt werden muss, was vorteilhaft zu einer geringeren Komplexität einer dazu verwendeten Schnittstelle führen kann.

Erfindungsgemäß kann vorgesehen sein, dass bei einer zu stellenden Schaltfrequenz des wenigstens einen Schaltelements, welche geringer ist als eine Rechenfrequenz, mit der die Schaltsignalinformation fortlaufend ermittelt wird, die Lage von mehreren aufeinanderfolgenden Einschaltsignalen so gewählt wird, dass sich ein über mehrere Schaltsignalzeitfenster zusammenhängender Gesamteinschaltpuls ergibt. Der zusammenhängende Gesamteinschaltpuls setzt sich aus einer Einschaltflanke bzw. einer steigenden Flanke innerhalb eines ersten Schaltfensters, einen oder mehreren Dauer-Anschaltzuständen in einem oder mehreren weiteren Schaltsignalzeitfenstern sowie einer Ausschaltflankenlage in einem letzten Schaltsignalzeitfenster zusammen.

In einer bevorzugten Ausgestaltung der Erfindung kann vorgesehen sein, dass bei einer zu stellenden Schaltfrequenz des wenigstens einen Schaltelements, welche höher ist als eine Rechenfrequenz, mit der die Schaltsignalinformation fortlaufend ermittelt wird, mehrere aufeinanderfolgende Einschaltsignale mit jeweils einer mittigen Anordnung im Schaltsignalzeitfenster erzeugt werden. Dies ermöglicht es, ein Vielfaches der Rechenfrequenz, mit der die Schaltinformation ermittelt wird, als Folge von periodischen Einschaltsignalen zu stellen. Pro ermittelte Schaltsignalinformation werden dabei insbesondere für zwei oder mehr Schaltsignalzeitfenster jeweils zum Beispiel mittensynchrone Einschaltsignale ausgegeben. Die Folge aus Einschaltsignalen kann sich insbesondere über mehrere ermittelte Schaltsignalinformationen erstrecken und, insbesondere in einer Mehrzahl aus jeweils unterschiedlichen Schaltsignalinformationen zugeordneten Schaltsignalzeitfenstern, auch Einschaltsignale mit einer unterschiedlichen Einschaltdauer bzw. einer unterschiedlichen Pulsbreite oder eines unterschiedlichen Duty-Cycles umfassen.

Für die Schaltungsanordnung kann erfindungsgemäß vorgesehen sein, dass sie mehrere Schaltelemente umfasst, welche durch die Treiberschaltung in Abhängigkeit einer oder mehrerer Schaltsignalinformationen zum Einschalten und Ausschalten angesteuert werden. Zum Beispiel können mehrere Schaltelemente über jeweils eine Schaltsignalinformation geschaltet werden. Es ist auch möglich, dass zwei oder mehrere Transistoren, welche eine gemeinsame Schalteinheit bilden, über eine gemeinsame Schaltsignalinformation betrieben werden. Dabei kann beispielsweise bei einer Halbbrücke der High-Side-Transistor in Abhängigkeit der Schaltsignalinformation geschaltet werden, wobei der Low-Side-Transistor komplementär geschaltet wird, so dass er während der Einschaltphasen des High-Side-Transistors ausgeschaltet ist und während der Ausschaltphasen des High-Side-Transistors eingeschaltet ist.

Erfindungsgemäß kann als elektrische Schaltungsanordnung ein insbesondere dreiphasiger Pulswechselrichter verwendet werden. Dabei kann beispielsweise jeder der drei Phasenströme durch die Ansteuerung eines oder mehrerer Schaltelemente, insbesondere jeweils einer zwei der Schaltelemente umfassenden Halbbrücke, erzeugt werden. Der Pulswechselrichter kann beispielsweise drei Halbbrücken umfassen, sodass durch die elektrische Schaltungsanordnung eine dreiphasige Wechselspannung erzeugt werden kann. Bevorzugt ist der Pulswechselrichter bidirektional betreibbar, so dass auch eine umgekehrte Stromwandlung, zum Beispiel bei einem Generatorbetrieb eines angeschlossenen Motors, möglich ist.

Erfindungsgemäß kann vorgesehen sein, dass die Schaltsignalinformation von einem Steuergerät ermittelt wird, wobei dem Steuergerät zur Ermittlung einer der Schaltsignalinformationen wenigstens ein Messwert, insbesondere ein Statorstrommesswert und/oder ein Winkellagemesswert einer mit der elektrischen Schaltungsanordnung verbundenen elektrischen Maschine, zugeführt wird.

Jede Schaltsignalinformation kann somit auf Grundlage eines oder mehrerer Messwerte, beispielsweise eines Statorstrommesswerts und/oder eines Winkellagemesswerts eines durch die elektrischen Schaltungsanordnung bestromten elektrischen Motors, erfolgen. Die Schaltsignalinformation kann dabei beispielsweise in Abhängigkeit eines Motorbetriebs und/oder eines Generatorbetriebs der elektrischen Maschine erfolgen. Dabei werden der Messwert oder die Messwerte, insbesondere mit wenigstens einer der Rechenfrequenz entsprechenden Messfrequenz, über ein oder mehrere der elektrischen Maschine und/oder der elektrischen Schaltung zugeordnete Messmittel ermittelt. Für jede zu ermittelnde Schaltsignalinformation liegen insbesondere neue bzw. aktuelle Messwerte vor.

Erfindungsgemäß kann vorgesehen sein, dass die Schaltsignalinformation in Abhängigkeit eines Arbeitspunkts der elektrischen Schaltungsanordnung und/oder eines Arbeitspunkts einer mit der elektrischen Schaltungsanordnung verbundenen elektrischen Maschine gewählt wird. Dies ermöglicht es, dass beispielsweise eine zu stellende Schaltfrequenz des wenigstens einen Schaltelements in Abhängigkeit des Arbeitspunkts der elektrischen Schaltungsanordnung bzw. des Arbeitspunkts der mit der elektrischen Schaltungsanordnung verbundenen elektrischen Maschine ausgewählt und eingestellt wird. Dadurch kann insbesondere eine Schaltfrequenz verwendet werden, bei der die elektrische Schaltungsanordnung und/oder die elektrische Maschine ein Verlustminimum aufweisen. Eine Abhängigkeit zwischen den möglichen Arbeitspunkten der elektrischen Schaltungsanordnung und/oder den möglichen Arbeitspunkten der mit der elektrischen Schaltungsanordnung verbundenen elektrischen Maschine kann beispielsweise in einem zur Durchführung des Verfahrens eingerichteten Steuergerät hinterlegt sein.

Für ein erfindungsgemäßes Steuergerät zum Ansteuern einer Treiberschaltung für eine wenigstens ein Schaltelement umfassende elektrische Schaltungsanordnung ist vorgesehen, dass es zur Durchführung eines erfindungsgemäßen Verfahrens eingerichtet ist.

Für eine erfindungsgemäße elektrische Schaltungseinrichtung ist vorgesehen, dass sie eine Treiberschaltung, eine wenigstens ein Schaltelement umfassende elektrische Schaltungsanordnung sowie ein erfindungsgemäßes Steuergerät umfasst.

Für ein erfindungsgemäßes Kraftfahrzeug ist vorgesehen, dass es eine erfindungsgemäße elektrische Schaltungseinrichtung umfasst.

Sämtliche vorangehend in Bezug zu dem erfindungsgemäßen Verfahren beschriebene Vorteile und Ausgestaltungen gelten entsprechend für das erfindungsgemäße Steuergerät, die erfindungsgemäße elektrische Schaltungseinrichtung, das erfindungsgemäße Kraftfahrzeug und umgekehrt. Entsprechend gelten auch die Vorteile und Einzelheiten des erfindungsgemäßen Steuergeräts für die erfindungsgemäße elektrische Schaltungseinrichtung und das erfindungsgemäße Kraftfahrzeug und umgekehrt. Außerdem gelten auch die Vorteile und Einzelheiten der erfindungsgemäßen elektrischen Schaltungseinrichtung für das erfindungsgemäße Kraftfahrzeug und umgekehrt.

Weitere Vorteile und Einzelheiten der Erfindung ergeben sich aus den im Folgenden beschriebenen Ausführungsbeispielen sowie anhand der Zeichnungen. Diese sind schematische Darstellungen und zeigen:
- Fig. 1: ein Ausführungsbeispiel eines erfindungsgemäßen Kraftfahr-zeugs,
- Fig. 2: ein Ausführungsbeispiel einer erfindungsgemäßen elektrischen Schaltungseinrichtung, umfassend ein erfindungsgemäßes Steuergerät zur Ausführung eines Ausführungsbeispiels eines erfindungsgemäßen Verfahrens,
- Fig. 3 - 6: Diagramme zur Darstellung der verschiedenen Lagen eines Einschaltsignals innerhalb eines Schaltsignalzeitfensters,
- Fig. 7: ein Diagramm zur Darstellung eines Einschaltsignals, welches ein innerhalb eines Schaltsignalzeitfensters dauerhaft einge-schaltetes Schaltelement beschreibt,
- Fig. 8: ein Diagramm zur Darstellung eines Einschaltsignals, welches ein innerhalb eines Schaltsignalzeitfensters dauerhaft ausge-schaltetes Schaltelement beschreibt,
- Fig. 9: ein Diagramm zur Darstellung eines ersten Betriebszustands ei-nes mittels des erfindungsgemäßen Verfahrens angesteuerten Schaltelements,
- Fig. 10: ein Diagramm zur Darstellung eines zweiten Betriebszustands eines mittels des erfindungsgemäßen Verfahrens angesteuer-ten Schaltelements, und
- Fig. 11: ein Diagramm zur Darstellung eines dritten Betriebszustands ei-nes mittels des erfindungsgemäßen Verfahrens angesteuerten Schaltelements.

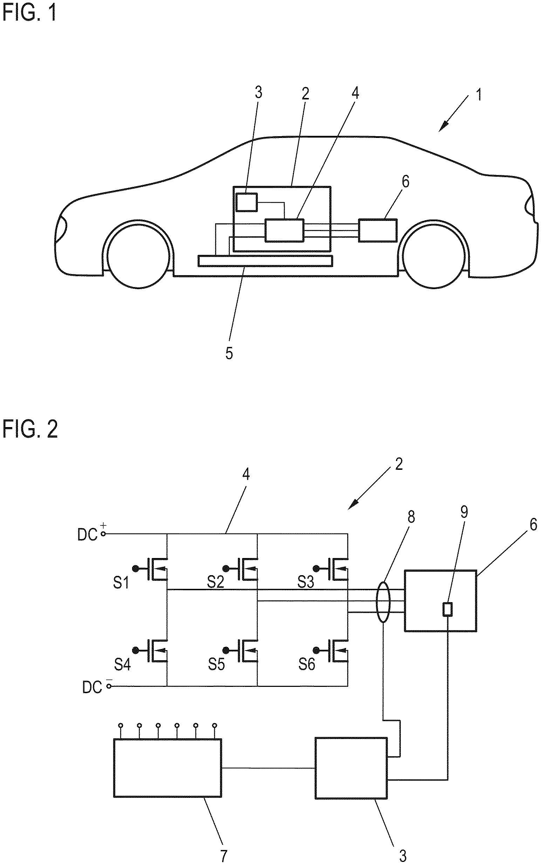

In Fig. 1 ist ein Ausführungsbeispiel eines Kraftfahrzeugs 1 dargestellt. Das Kraftfahrzeug 1 umfasst eine elektrische Schaltungseinrichtung 2 sowie ein Steuergerät 3, welches zum Ansteuern einer wenigstens ein Schaltelement umfassenden elektrischen Schaltungsanordnung 4 der elektrischen Schaltungseinrichtung 2 ausgebildet ist. Die elektrische Schaltungsanordnung 4 dient dazu, eine Gleichspannung, welche von einem Traktionsenergiespeicher 5 des Kraftfahrzeugs bereitgestellt wird, in eine insbesondere dreiphasige Wechselspannung zum Betrieb eines Traktionselektromotors 6 des Kraftfahrzeugs 1 zu wandeln. Auch eine umgekehrte Wandlung eines Stroms in einem Generatorbetrieb des Traktionselektromotors 6 ist möglich. Der Traktionselektromotor kann zum Beispiel als Synchronmaschine oder als Asynchronmaschine ausgeführt sein. Bei dem Traktionsenergiespeicher 5 kann es sich zum Beispiel um eine Batterie, beispielsweise eine Hochvolt-Batterie, handeln.

In Fig. 2 ist eine elektrische Schaltungseinrichtung 2 dargestellt. Die elektrische Schaltungseinrichtung 2 umfasst neben dem Steuergerät 3 und der elektrischen Schaltungsanordnung 4, welche als ein dreiphasiger Pulswechselrichter ausgebildet ist, auch eine Treiberschaltung 7, welche zum Ansteuern der Schaltelemente Sᵢ der Schaltungsanordnung 4 dient. Die Verbindungen zwischen der Treiberschaltung 7 und den Gate-Anschlüssen der Schaltelemente S₁ - S₆ sind aus Gründen der Übersichtlichkeit nicht dargestellt. Die Schaltelemente S₁ - S₆ sind als Transistoren, zum Beispiel als Metalloxid-Halbleiter-Feldeffekt-Transistoren oder als Bipolartransistoren mit isolierendem Gate, ausgeführt.

Das Steuergerät 3 ermittelt fortlaufend eine Schaltsignalinformation, welche von dem Steuergerät 3 über eine Schnittstelle an die Treiberschaltung 7 übermittelt wird. In Abhängigkeit der Schaltsignalinformation nimmt die Treiberschaltung 7 eine Ansteuerung zumindest eines Teils der Schaltelemente Sᵢ der Schaltungsanordnung 4 vor. Die Schaltungsanordnung 4 ist an den Klemmen DC⁺ und DC⁻ mit dem hier nicht dargestellten Traktionsenergiespeicher 5 verbunden.

Das Steuergerät 3 ist dazu eingerichtet, die Treiberschaltung 7 zur Ansteuerung wenigstens eines Schaltelements Sᵢ der Schaltelemente S₁ - S₆ der elektrischen Schaltungsanordnung 4 anzusteuern. Das jeweilige Schaltelement Sᵢ wird durch die Treiberschaltung 7 in Abhängigkeit der Schaltsignalinformation zum Einschalten und Ausschalten angesteuert. Die Schaltsignalinformation wird von dem Steuergerät 3 fortlaufend mit einer Rechenfrequenz ermittelt. Die Zeitdauer, welche zwischen der Ermittlung zweier Schaltsignalinformationen liegt, wird durch die maximal mögliche Rechenfrequenz und somit durch die Rechenleistung des Steuergeräts 3 begrenzt.

Das Steuergerät 3 kann die Schaltsignalinformation z. B. in Abhängigkeit wenigstens eines Messwerts, bestimmen. Dazu kann das Steuergerät 3 beispielsweise mit einem oder mehreren Messmitteln, welche der Schaltungsanordnung 4 und/oder elektrischen Maschine 6 zugeordnet sind, verbunden werden. Bei den Messmitteln kann es sich beispielsweise um ein Statorstrommessmittel 8 und/oder um ein Winkellagemessmittel 9 handeln, welche entsprechend einen Statorstrommesswert bzw. einen Winkellagemesswert an das Steuergerät 3 übermitteln.

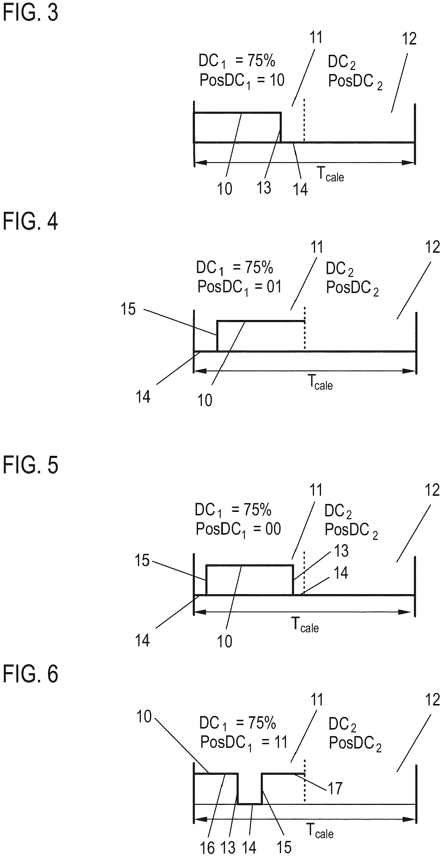

Die Signallageinformation gibt jeweils für wenigstens ein Schaltsignalzeitfenster mit festgelegter Dauer eine Einschaltdauer und eine Signallageinformation vor. Dabei wird für ein Einschaltsignal, das sich aus einer Einschaltdauer ergibt, die geringer als die Dauer des Schaltsignalzeitfensters ist, durch die Signallageinformation die Lage des Einschaltsignals innerhalb des Schaltsignalzeitfensters angegeben. Die Lagen einer Gruppe von möglichen Lagen eines Einschaltsignals 10 innerhalb eines ersten Schaltsignalzeitfensters 11 sind nachfolgend in den Figuren 3 bis 8 beispielhaft dargestellt. Dabei ist jeweils auf der Abszisse die Zeit und auf der Ordinate der Signalpegel des Einschaltsignals 10 dargestellt. Für das zweite Schaltsignalzeitfenster 12, welches ebenfalls innerhalb der Rechenperiode T_{Calc} liegt, ist jeweils kein Einschaltsignal 10 dargestellt.

In Fig. 3 ist ein Diagramm dargestellt, welches eine Ausschaltflankenlage des Einschaltsignals 10 darstellt. Innerhalb der mit Tcaic bezeichneten Rechendauer des Steuergerätes 3, also dem Kehrwert der Rechenfrequenz des Steuergeräts 3, liegen im vorliegenden Ausführungsbeispiel zwei Schaltsignalzeitfenster 11, 12. Für das erste Schaltsignalzeitfenster 11 ist ein Einschaltsignal 10 dargestellt, welches sich in einer Ausschaltflankenlage befindet. Dabei beginnt das Einschaltsignal 10 direkt zu Beginn des Schaltsignalzeitfensters 11. Dem Schaltsignal 10 ist eine Einschaltdauer DC₁ zugeordnet, welche vorliegend beispielsweise 75 % der zeitlichen Dauer des Schaltsignalzeitfensters 11 entspricht. Dies bedeutet, dass die Einschaltdauer Tₑ des Einschaltsignals 10 75 % der zeitlichen Dauer des Schaltsignalzeitfensters 11 bzw. einem Duty-Cycle von 75 % entspricht. Entsprechend ist das Einschaltsignal 10 zu Beginn des Schaltsignalzeitfensters 11 für 75 % der zeitlichen Dauer des Schaltsignalfensters 11 in einer Einschaltphase eingeschaltet, wonach eine Ausschaltflanke 13 folgt. Zwischen der Ausschaltflanke 13 und dem Ende des Schaltsignalzeitfensters 11 befindet sich eine Ausschaltphase 14. Die Einschaltphase wird durch einen ersten Signalpegel des Schaltsignals gebildet, welcher sich von einem zweiten Signalpegel, der die Ausschaltphase 14 kennzeichnet, unterscheidet.

In Fig. 4 ist eine Einschaltflankenlage des Einschaltsignals 10 dargestellt. Auch in diesem Beispiel beträgt die Einschaltdauer DC₁ 75 % der Zeitdauer des Schaltsignalzeitfensters 11. In der Einschaltflankenlage endet das Einschaltsignal 10 direkt am Ende des Schaltsignalzeitfensters 11. Zu Beginn des Schaltsignalzeitfensters 11 liegt also eine Ausschaltphase 14, wonach eine Einschaltflanke 15 folgt und das Einschaltsignal 10 für die der Einschaltdauer entsprechende restliche Dauer des Schaltsignalzeitfensters 11 auf dem ein eingeschaltetes Schaltelement Sᵢ bezeichnenden ersten Signalpegel liegt.

In Fig. 5 ist eine mittensynchrone Lage des Einschaltsignals 10 dargestellt. In dieser Lage liegt das Einschaltsignal mittig in dem Schaltsignalzeitfenster 11. Auch in diesem Beispiel beträgt die Einschaltdauer 75 % der zeitlichen Dauer des Schaltsignalzeitfensters 11. Nach der Ausschaltflanke 13 bzw. vor der Einschaltflanke 15 des Einschaltsignals 10 liegt jeweils eine Ausschaltphase 14.

In Fig. 6 ist eine inverse Lage des Einschaltsignals 10 im Schaltsignalzeitfenster 11 dargestellt, wobei ein erster Teil 16 des Einschaltsignals 10 direkt zu Beginn des Schaltsignalzeitfensters 11 beginnt und ein zweiter Teil 17 des Einschaltsignals 10 am Ende des Schaltsignalzeitfensters 11 endet. Zwischen dem ersten Teil 16 und dem zweiten Teil 17 des Einschaltsignals 10 liegt eine Ausschaltphase 14. Auch in diesem Ausführungsbeispiel beträgt die Einschaltdauer des Einschaltsignals 75 % der Zeitdauer des Schaltsignalzeitfensters 11.

Zwischen dem ersten Teil 16 und der Ausschaltphase 14 liegt eine Ausschaltflanke 13 des Schaltsignals 10. Entsprechend liegt zwischen der Ausschaltphase 14 und dem zweiten Teil 17 des Einschaltsignals 10 eine Einschaltflanke 15. Die Ausschaltphase 14 liegt mittig in dem Schaltsignalzeitfenster 11, so dass sich insgesamt aus dem ersten Teil 16 und dem zweiten Teil 17 des Einschaltsignals 10 die geforderte Einschaltdauer DC₁ von 75 % ergibt.

Die vorangehend dargestellten Lagen können vorteilhaft nummeriert werden, wie beispielhaft durch den Wert PosDC₁ als 2 Bit-Binärzahl dargestellt ist. Dies ermöglicht es, dass die Signallageinformation als Zahlenwert PosDC₁ von dem Steuergerät 3 an die Treiberschaltung 7 übermittelt wird. In der Treiberschaltung 7 kann entsprechend eine Zuordnungsvorschrift hinterlegt sein, welche entsprechend der Signallageinformation PosDC₁ und der weiterhin übermittelten Einschaltdauer DC₁ eine Ansteuerung beispielsweise des Schaltelements S₁ vornimmt.

Es kann vorgesehen sein, dass in den Ausschaltphasen 14 des Einschaltsignals 10 das Schaltsignal S₄, welches mit dem Schaltelement S₁ eine Halbbrücke bildet, eingeschaltet wird und sich somit für das Schaltelement S₄ ein komplementärer Schaltbetrieb ergibt. Alternativ kann das Schaltelement S₄ auch mittels einer eigenen, zugeordneten Schaltsignalinformation geschaltet werden. Entsprechend gilt dies auch für die weiteren High-Side-Schaltelemente S₂ und S₃ sowie für die entsprechenden weiteren Low-Side-Schaltelemente S₅ und S₆. Zusätzlich zu den in den Figuren 3 bis 6 dargestellten Lagen sind auch eine Einschaltdauer, welche 100 % der zeitlichen Dauer des Schaltsignalzeitfensters entspricht, sowie eine Einschaltdauer, welche 0 % der zeitlichen Dauer des Schaltsignalzeitfensters entspricht, möglich.

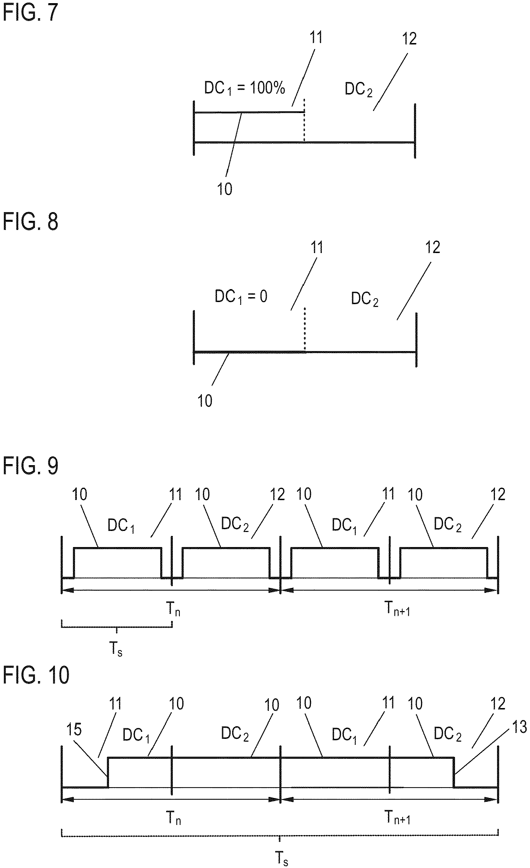

In Fig. 7 ist der Fall dargestellt, in der die Einschaltdauer 100 % der Zeitdauer des Schaltsignalzeitfensters 11 entspricht. Entsprechend ist das Einschaltsignal 10 für die komplette des Zentfensters 11 auf dem einem eingeschalteten Zustand des Schaltelements Sᵢ zugeordneten Schaltpegel. Eine gesonderte Lage muss dem Einschaltsignal 10 dabei nicht zugeordnet werden, da der Wert des Einschaltsignals für die gesamte Dauer des Schaltsignalzeitfensters 11 konstant ist. Es kann in diesem Fall keine oder eine beliebige Signallageinformation übermittelt werden.

In Fig. 8 ist entsprechend ein Einschaltsignal für eine Einschaltdauer von 0 % der zeitlichen Dauer des Schaltsignalzeitfensters 11 dargestellt. Das Einschaltsignal 10 ist entsprechend für die komplette zeitliche Dauer des Schaltsignalzeitfensters 11 auf dem einen ausgeschalteten Zustand des Schaltelements Sᵢ entsprechenden Schaltpegel, so dass auch in diesem Fall keine oder eine beliebige Lage zugewiesen werden kann.

Wie vorangehend in den Figuren 3 bis 8 bereits angedeutet wurde, folgt nach dem Schaltsignalzeitfenster 11 innerhalb der Rechenperiode Tcaic wenigstens ein weiteres Signalschaltfenster 12, welchem entsprechend eine eigene Einschaltdauer DC₂ und eine eigene Signallageinformation PosDC₂ eines Einschaltsignals 10 innerhalb des zweiten Schaltsignalzeitfensters 12 zugeordnet werden kann. Dies ermöglicht es, die vorangehend dargestellten einzelnen Zustände der Schaltsignale 10 miteinander zu kombinieren, um verschiedene Ansteuerungen des wenigstens einen Schaltelements Sᵢ zu erhalten.

Die Einschaltdauer DC₂ und die Signallageinformation PosDC₂ werden dabei als eine gemeinsame Schaltsignalinformation, insbesondere aus denselben Messwerten der Messmittel 8, 9, ermittelt. Dabei kann vorgesehen sein, dass die Einschaltdauer DC₂ gleich der Einschaltdauer DC₁ ist, wodurch der Rechenaufwand bei der Ermittlung der Schaltsignalinformation für die zwei Schaltsignalzeitfenster 11, 12 gering gehalten werden kann. Auch das Verwenden einer unterschiedlichen Einschaltdauer, zum Beispiel gemäß eines vorgegebenen Verhältnisses bzw. einer in dem Steuergerät 3 hinterlegten Zuordnungsvorschrift, ist möglich. Für die Signallageinformation PosDC₂ des Einschaltsignals 10 im zweiten Schaltsignalzeitfenster 12 kann die gleiche oder eine andere Lage als durch die Signallageinformation PosDC₁ angegeben werden, wodurch sich unterschiedliche Kombinationen von Einschaltsignalen bzw. Schaltfrequenzen des geschalteten Schaltelements Sᵢ ergeben, wie im Folgenden dargestellt wird.

In Fig. 9 ist ein Beispiel zum Schalten eines der Schaltelemente Sᵢ dargestellt. Dabei wird für jedes der Schaltsignalzeitfenster 11, 12 während einer Rechenperiode Tₙ jeweils ein mittensynchrones Einschaltsignal 10 ausgegeben. Für das Schaltsignalzeitfenster 11 weist das Einschaltsignal 10 eine Einschaltdauer von DC₁ und für das zweite Schaltsignalzeitfenster 12 weist das Einschaltsignal 10 eine Einschaltdauer von DC₂ auf. Die jeweilige Periodendauer Ts des Einschaltvorgangs ist hierbei halb so groß wie die Periodendauer Tₙ des Rechenvorgangs, in dem die Schaltsignalinformation ermittelt wird. Dies ermöglicht es, dass pro ermittelter Schaltsignalinformation zwei Schaltvorgänge des Schaltelements Sᵢ vorgenommen werden können. Die Schaltfrequenz fₛ = 1 / Tₛ, mit der das Schaltelement Sᵢ geschaltet wird, ist folglich doppelt so hoch wie die Frequenz, mit der das Steuergerät 3 die Schaltsignalinformationen berechnet.

Die jeweils mittensynchron in den einzelnen Schaltsignalzeitfenstern liegenden Einschaltsignale 10 können auch für eine nachfolgende Rechenperiode Tₙ₊₁ weiter als Schaltsignale in mittensynchroner Lage ausgegeben werden. In Abhängigkeit beispielsweise neuer, von dem Steuergerät 3 ausgewerteter Messwerte, kann für die Rechenperiode Tₙ₊₁ jeweils eine neue Einschaltdauer DC₁ und/oder DC₂ für die Schaltsignalzeitfenster 11, 12 gewählt werden.

Dieser Betriebszustand ermöglicht es, dass hohe Schaltfrequenzen des Schaltelements Sᵢ auch bei niedriger Rechenfrequenz f_{Calc} = 1 / Tₙ durchgeführt werden können. Es werden in einer Rechenperiode zwei oder mehr aufeinanderfolgende mittensynchrone Pulse mit der gleichen Strom- bzw. Winkelinformation durch das Steuergerät 3 berechnet. Durch diesen Betriebszustand wird es beispielsweise ermöglicht, die elektrische Maschine 6 und die Schaltungsanordnung 4 bei einem Verlustminimum zu betreiben, welches insbesondere bei hohen Schaltfrequenzen, welche die Rechenfrequenz f_{Calc} des Steuergeräts übersteigen können, liegen kann.

Durch die dargestellte Verdopplung der Schaltfrequenz des Schaltelements Sᵢ kann auch die höhere Schaltfrequenz fₛ beim Betrieb der elektrischen Maschine 6 umgesetzt werden, so dass beispielsweise Verluste aufgrund von Oberschwingungen oder Ähnlichem vorteilhaft vermieden werden können, was zu einer Steigerung der Effizienz der elektrischen Maschine 6 führt. Bei Einsatz der elektrischen Schaltungseinrichtung 2 in dem Kraftfahrzeug 1 kann somit vorteilhaft die Reichweite des Kraftfahrzeugs 1 in einem elektrischen Fahrbetrieb, in dem der elektrischen Traktionselektromotor 6 aus dem Traktionsenergiespeicher 5 gespeist wird, vergrößert werden.

Abhängig von der Ausgestaltung des Steuergerätes 3 kann die Rechendauer Tₙ beispielsweise 100 µs betragen. Dabei kann zum Beispiel vorgesehen sein, dass das Steuergerät eine Auslastung von 80% hat und somit eine Schaltsignalinformation innerhalb von 80 µs berechnet, wobei alle 100 µs eine neue Schaltsignalinformation über die Schnittstelle an die Treiberschaltung 7 übermittelt wird. Innerhalb des Rechenzeitfensters von 100 µs können die Schaltsignalinformationen für die Schaltelemente Sᵢ an die Treiberschaltung übermittelt und von dieser entsprechend zur Ansteuerung der Schaltelemente Sᵢ verwendet werden. Bei der Verwendung von zwei Schaltsignalzeitfenstern pro Rechenperiode kann somit eine Schaltfrequenz von 20 kHz erreicht werden. Vorteilhaft kann auf diese Weise eine bessere Nachbildung eines sinusförmigen Spannungsverlaufs erreicht werden, als es bei einer rein mittensynchronen Ansteuerung in einem doppelt so großen Zeitfenster und somit bei 10 kHz der Fall wäre. Vorteilhaft ist die Frequenzerhöhung auch größer, als die 12,5 kHz Schaltfrequenz, welche bei einer Steigerung der Auslastung auf 100% erreicht werden können.

In Fig. 10 ist eine zweite Ansteuerung eines mittels des Verfahrens betriebenen Schaltelements Sᵢ dargestellt. In diesem Fall ist die Schaltdauer Ts des Schaltelements Sᵢ doppelt so groß wie die Rechenperiode Tₙ bzw. Tₙ₊₁. In diesem Ansteuerungsbetrieb wird in der ersten Rechenperiode Tₙ in dem ersten Schaltsignalzeitfenster 11 ein Einschaltsignal mit der Einschaltdauer DC₁ ausgegeben, welches in Einschaltflankenlage liegt.

In dem anschließenden Schaltsignalzeitfenster 12 wird entsprechend dauerhaft ein eingeschaltetes Einschaltsignal mit DC₂ gleich 100 % ausgegeben. Entsprechend wird für die zweite Rechenperiode Tₙ₊₁ für das erste Signalschaltfenster 11 ein dauerhaft angeschaltetes Einschaltsignal mit einer Einschaltdauer von DC₁ gleich 100 % ausgegeben. In dem nachfolgenden Schaltsignalzeitfenster 12 wird ein Einschaltsignal 10 mit einer Einschaltdauer DC₂ von beispielsweise 75 % in Ausschaltflankenlage ausgegeben. Dies führt dazu, dass sich insgesamt über die beiden Rechenperioden Tₙ sowie Tₙ₊₁ ein Gesamteinschaltpuls 18 ausgegeben wird. Aufgrund der Breite dieses Pulses über mehrere Schaltsignalzeitfenster 11, 12 hinweg ist die Schaltfrequenz fₛ = 1/Tₛ halb so groß wie die Frequenz fₙ = 1/Tₙ. Die Einschaltflanke 15 des Gesamteinschaltpulses 18 wird in dem ersten Schaltsignalzeitfenster 11 zu Beginn gestellt, die Ausschaltflanke 13 entsprechend in dem letzten Schaltsignalzeitfenster 12 der zweiten Rechenperiode Tₙ₊₁.

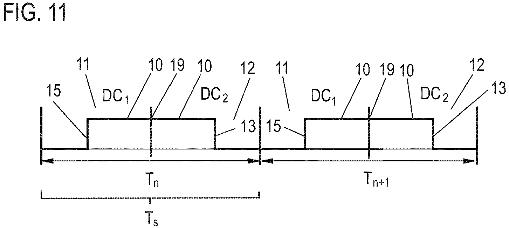

In Fig. 11 ist ein dritter Ansteuerzustand eines der Schaltelemente Sᵢ dargestellt. In diesem Ansteuerzustand wird in dem ersten Schaltsignalzeitfenster 11 ein Einschaltsignal 10 in Einschaltflankenlage und mit einer Einschaltdauer DC₁ von beispielsweise 40 % ausgegeben. Im nachfolgenden zweiten Schaltsignalzeitfenster 12 der ersten Rechenperiode Tₙ wird entsprechend ein Einschaltsignal 10 in Ausschaltflankenlage ebenfalls mit einem in einer Einschaltdauer DC₂ von 40 % eingestellt. In der nachfolgenden Rechenperiode Tₙ₊₁ wird entsprechend jeweils ein Einschaltsignal 10 in dem ersten Schaltsignalzeitfenster 11 mit einer Einschaltdauer DC₁ und dem zweiten Schaltsignalzeitfenster 12 ein weiteres Einschaltsignal in Ausschaltflankenlage mit der Einschaltdauer DC₂ ausgegeben.

Es ist dabei möglich, dass die Einschaltdauer DC₁ und DC₂ in der zweiten Rechenperiode Tₙ gleich sind, jedoch von den Dauern DC₁ und DC₂ in dem zur ersten Rechenperiode N gehörenden Schaltsignalzeitfenster 11, 12 verschieden sind. Für die Rechenperiode Tₙ₊₁ wird die Schaltsignalinformation auf Grundlage neuer an das Steuergerät 3 übermittelter Messwerte ermittelt, so dass eine andere Pulsbreite des sich hier ergebenden Gesamteinschaltpulses 19 ergeben kann. In diesem Ausführungsbeispiel ist die Schaltfrequenz fₛ = 1/Tₛ gleich der Rechenfrequenz fₙ = 1/Tₙ.

Auf diese Weise wird es ermöglicht, unterschiedliche Ansteuerzyklen mit dem Verfahren zum Ansteuern wenigstens eines Schaltelements Sᵢ umzusetzen. Neben einem Standardfall, in dem die Einschaltdauern DC₁ gleich der Einschaltdauer DC₂ ist, können durch das erfindungsgemäße Verfahren auch Gesamteinschaltpulse 19 erzeugt werden, welche unsymmetrisch sind, das heißt, bei welchem jeweils in dem zweiten Schaltsignalzeitfenster 12 eine andere Einschaltdauer DC₂ als für das erste Schaltsignalzeitfenster 11 vorgesehen ist.

Es ist möglich, dass weitere Ansteuervorgänge erzeugt werden, insbesondere unter Verwendung des in Fig. 6 gezeigten inversen Einschaltsignals sowie des in Fig. 8 gezeigten Dauerauszustands. Auf diese Weise können weitere Ansteuersignale erzeugt werden, welche in ihrem Zeitverlauf weiter an die optimalen Betriebsbedingungen der elektrischen Schaltungsanordnung 4 und/oder an die elektrische Maschine 6 angepasst werden können. Es ist auch möglich, dass neben dem Beispiel, in dem pro Rechenperiode Tₙ zwei Schaltsignalzeitfenster 11, 12 verwendet werden, drei oder mehr Schaltsignalzeitfenster verwendet werden. Dies ermöglicht insbesondere auch eine Erhöhung der Schaltfrequenz fₛ gegenüber der Rechenfrequenz fₙ um mehr als einen Faktor 2. Durch die weiteren, in den Figuren 3 bis 6 dargestellten Lagen der Einschaltsignale 10 wird es auch in solchen Fällen ermöglicht, einen Ansteuerzustand zu erreichen, in dem die Schaltfrequenz fₛ gleich der Rechenfrequenz fₙ ist bzw. in der die Schaltfrequenz fₛ geringer als die Schaltfrequenz fₙ ist.

Zusätzlich zu den dargestellten Lagen sind auch weitere Lagen möglich, welche beispielsweise mehr als einen kompletten Einschaltpuls, das heißt zwei oder mehr Paare aus Einschaltflanken und Ausschaltflanken, enthalten. Dabei kann die Einschaltdauer für das Schaltsignalzeitfenster auf zwei oder mehrere Teileinschaltsignale aufgeteilt werden, welche sich insbesondere über mehrere Schaltsignalzeitfenster zu einem periodischen Gesamtsignal zusammenfügen. Mittels einer oder mehreren solchen Lagen können auch innerhalb eines Schaltsignalzeitfenster pro Rechenperiode eine Erhöhung der Schaltfrequenz erzielt werden. In einem solchen Ausgestaltung erhöht sich die Anzahl der möglichen Lagen, so dass eine größere bzw. komplexere Signallageinformation benötigt wird.

Vorteilhaft wird es durch das Verfahren ermöglicht, dass bei einer vorgegebenen, maximalen Prozessorauslastung eines Prozessors des Steuergerätes 3 eine möglichst hohe Schaltfrequenz der Schaltelemente Sᵢ erreicht werden kann. Dadurch kann vorteilhaft vermieden werden, dass vergleichsweise teure Steuergeräte 3 mit leistungsstarken Prozessoren zum Betrieb der Schaltungsanordnung 4 bzw. zum Bestromen der elektrischen Maschine 6 erforderlich werden. Weiterhin wird vorteilhaft ermöglicht, dass pro Periode der Grundwelle der zu erzeugenden Wechselspannung auch weiterhin hinreichend viele, zum Beispiel zehn, Schaltvorgänge der Schaltelemente S₁ - S₆ vorgenommen werden können, wenn Grundwellen mit höherer Frequenz erzeugt werden sollen bzw. es können für eine gegebene Grundfrequenz der Wechselspannung mehr Schaltvorgänge verwendet werden.

## Patentansprüche

1. Verfahren zum Ansteuern einer wenigstens ein Schaltelement (Sᵢ) umfassenden elektrischen Schaltungsanordnung (4), wobei das Schaltelement (Sᵢ) durch eine Treiberschaltung (7) in Abhängigkeit einer Schaltsignalinformation zum Einschalten und Ausschalten angesteuert wird, wobei die Schaltsignalinformation fortlaufend ermittelt wird und jeweils für wenigstens ein Schaltsignalzeitfenster (11, 12) mit festgelegter Dauer eine Einschaltdauer und eine Signallageinformation vorgibt, wobei für ein Einschaltsignal (10), das sich aus einer Einschaltdauer ergibt, die geringer als die Dauer des Schaltsignalzeitfensters (11, 12) ist, durch die Signallageinformation die Lage des Einschaltsignals (10) innerhalb des Schaltsignalzeitfensters angegeben wird.

2. Verfahren nach Anspruch 1,
**dadurch gekennzeichnet,**
**dass** die Schaltsignalinformation für zwei oder mehr Schaltsignalzeitfenster (11, 12) jeweils eine Einschaltdauer und eine Signallageinformation vorgibt.

3. Verfahren nach Anspruch 1 oder 2,
**dadurch gekennzeichnet,**
**dass** die Signallageinformation eine Lage aus einer Gruppe aus mehreren möglichen Lagen angibt.

4. Verfahren nach Anspruch 3,
**dadurch gekennzeichnet,**
**dass** die Gruppe aus möglichen Lagen eine Ausschaltflankenlage, bei der das Einschaltsignal (10) direkt zu Beginn des Schaltsignalzeitfensters (11, 12) beginnt, eine Einschaltflankenlage, bei der das Einschaltsignal (10) direkt am Ende des Schaltsignalzeitfensters (11, 12) endet, eine mittensynchrone Lage, bei der das Einschaltsignal (10) mittig in dem Schaltsignalzeitfenster (11, 12) liegt, und/oder eine inverse Lage, bei der ein erster Teil (16) des Einschaltsignals (10) direkt zu Beginn des Schaltsignalzeitfensters (11, 12) beginnt und ein zweiter Teil (17) des Einschaltsignals (10) am Ende des Schaltsignalzeitfensters (11, 12) endet, wobei zwischen dem ersten Teil (16) und dem zweiten Teil (17) eine Ausschaltphase (14) liegt, umfasst.

5. Verfahren nach einem der vorangehenden Ansprüche,
**dadurch gekennzeichnet,**
**dass** bei einer zu stellenden Schaltfrequenz des wenigstens einen Schaltelements (Sᵢ), welche geringer ist als eine Rechenfrequenz, mit der die Schaltsignalinformation fortlaufend ermittelt wird, die Lage von mehreren aufeinanderfolgenden Einschaltsignalen (10) so gewählt wird, dass sich ein über mehrere Schaltsignalzeitfenster (11, 12) zusammenhängender Gesamteinschaltpuls (18, 19) ergibt.

6. Verfahren nach einem der vorangehenden Ansprüche,
**dadurch gekennzeichnet,**
**dass** bei einer zu stellenden Schaltfrequenz des wenigstens einen Schaltelements (Sᵢ), welche höher ist als eine Rechenfrequenz, mit der die Schaltsignalinformation fortlaufend ermittelt wird, mehrere aufeinanderfolgende Einschaltsignale (10) mit jeweils einen mittigen Anordnung im Schaltsignalzeitfenster (11, 12) erzeugt werden.

7. Verfahren nach einem der vorangehenden Ansprüche,
**dadurch gekennzeichnet,**
**dass** die elektrische Schaltungsanordnung (4) mehrere Schaltelemente (Sᵢ) umfasst, welche durch die Treiberschaltung (7) in Abhängigkeit einer oder mehrerer Schaltsignalinformationen zum Einschalten und Ausschalten angesteuert werden.

8. Verfahren nach einem der vorangehenden Ansprüche,
**dadurch gekennzeichnet,**
**dass** als elektrische Schaltungsanordnung (4) ein insbesondere dreiphasiger Pulswechselrichter verwendet wird.

9. Verfahren nach einem der vorangehenden Ansprüche,
**dadurch gekennzeichnet,**
**dass** die Schaltsignalinformation von einem Steuergerät (3) ermittelt wird, wobei dem Steuergerät (3) zur Ermittlung einer der Schaltinformationen wenigstens ein Messwert, insbesondere ein Statorstrommesswert und/oder ein Winkellagemesswert einer mit der elektrischen Schaltungsanordnung (4) verbundenen elektrischen Maschine (6), zugeführt wird.

10. Verfahren nach einem der vorangehenden Ansprüche,
**dadurch gekennzeichnet,**
**dass** die Schaltsignalinformation in Abhängigkeit eines Arbeitspunkts der elektrischen Schaltungsanordnung (4) und/oder eines Arbeitspunkts einer mit der elektrischen Schaltungsanordnung (4) verbundenen Maschine (6) gewählt wird.

11. Steuergerät zum Ansteuern einer Treiberschaltung (7) für eine wenigstens ein Schaltelement (Sᵢ) umfassende elektrische Schaltungsanordnung (4), wobei das Steuergerät (3) zur Durchführung eines Verfahrens nach einem der vorangehenden Ansprüche eingerichtet ist.

12. Elektrische Schaltungseinrichtung, umfassend eine Treiberschaltung (7), eine wenigstens ein Schaltelement (Sᵢ) umfassende elektrische Schaltungsanordnung (4) und ein Steuergerät (3) nach Anspruch 11.

13. Kraftfahrzeug umfassend eine elektrische Schaltungseinrichtung (2) nach Anspruch 12.
